Europäisches Patentamt

European Patent Office

Office européen des brevets

(11) Veröffentlichungsnummer: **0 221 573**
**B1**

(12) **EUROPÄISCHE PATENTSCHRIFT**

(45) Veröffentlichungstag der Patentschrift:
24.05.89

(21) Anmeldenummer: 86115479.7

(22) Anmeldetag: 07.11.86

(51) Int. Cl.⁴: **B60J 1/20**

(54) Fahrzeugfensterrollo.

(30) Priorität: 07.11.85 DE 3539513

(43) Veröffentlichungstag der Anmeldung:
13.05.87 Patentblatt 87/20

(45) Bekanntmachung des Hinweises auf die Patenterteilung:
24.05.89 Patentblatt 89/21

(84) Benannte Vertragsstaaten:
AT BE CH DE ES FR GB IT LI SE

(56) Entgegenhaltungen:
DE-A- 3 345 503
DE-A- 3 415 930
FR-A- 2 244 901
FR-A- 2 429 317
FR-A- 2 588 307
GB-A- 562 668

(73) Patentinhaber: elero Antriebs- und
Sonnenschutztechnik Gmbh & Co. KG., Linsenhofer
Strasse 59-65, D-7444 Beuren(DE)

(72) Erfinder: Walter, Erich, Hebbelstrasse 7,
D-7318 Lenningen 1(DE)

(74) Vertreter: Klunker . Schmitt-Nilson . Hirsch,
Winzererstrasse 106, D-8000 München 40(DE)

**Beschreibung**

Die Erfindung bezieht sich auf ein Fahrzeugfensterrollo, mit einer Wickelwelle für das an seinem freien Rand mit einer Randstange versehene Rollotuch und mit einem elektrischen Bewegungsantrieb für das Rollotuch.

Fahrzeugfensterrollos, insbesondere zum Schutz gegen Sonneneinstrahlung, zum Schutz gegen Einblick oder zum Schutz gegen Blendung, gewinnen zunehmend an Beliebtheit, wobei als Beispiele insbesondere Omnibusfenster, Eisenbahnfenster, Wohnwagenfenster, Personenkraftwagenfenster und hierbei insbesondere das Rückfenster von Personenkraftwagen zu nennen sind. Man hat bereits daran gedacht, Rollos für das Heckfenster von Personenkraftwagen mit einem elektrischen Antrieb auszustatten, wobei die bisherigen Ansätze insbesondere hinsichtlich konstruktiver Ausgestaltung des elektrischen Antriebs oder Sicherstellung optimaler Rollotuchposition insbesondere im ausgefahrenen Zustand nicht überzeugend sind.

Der Erfindung liegt die Aufgabe zugrunde, ein elektrisch antreibbares Fahrzeugfensterrollo, insbesondere Rollo für die Heckscheibe eines Personenkraftwagens, zu schaffen, das bei einfachem und nicht störungsanfälligem Aufbau eine optimal funktionsgeeignete Rollotuchposition im ausgefahrenen Zustand sicherstellt.

Zur Lösung dieser Aufgabe ist das Fahrzeugfensterrollo erfindungsgemäß dadurch gekennzeichnet, daß innerhalb der Wickelwelle ein Rohrmotor als elektrischer Bewegungsantrieb der Wickelwelle angeordnet ist; daß das Rollotuch durch mindestens einen an der Randstange angreifenden Gelenkarm gespannt gehalten ist, der in Streckungsrichtung unter Federvorspannung steht; und daß ein Anlagebereich der Randstange mindestens gegen Ende der Ausfahrbewegung des Rollotuchs elastisch in Anlage an das Fahrzeugfenster oder dessen Rahmen gedrückt ist.

Das Antriebskonzept des erfindungsgemäßen Fahrzeugfensterrollos mit Rohrmotor und mindestens einem federbelasteten Gelenkarm schafft die Voraussetzung dafür, daß der Anlagebereich der Randstange erfindungsgemäß elastisch gegen das Fahrzeugfenster oder dessen Rahmen gedrückt werden kann, wodurch die Randstange auch bei fahrendem Fahrzeug praktisch vibrationsfrei und ohne Klappern bleibt. Die Gesamtkonstruktion ist platzsparend, und im eingefahrenen Zustand des Rollotuchs erstreckt sich kein Konstruktionsteil des Fahrzeugfensterrollos über das Fenster; vielmehr befindet sich in diesem Zustand das Fahrzeugfensterrollo insgesamt bei minimalem Platzbedarf an einem Fensterrand. Die Konstruktion ist aufgrund der Maßnahmen des kennzeichnenden Teils des Anspruchs 1 einfach, kostengünstig und dauerhaft.

Man kann mit einem im mittleren Bereich des Rollotuchs angeordneten Gelenkarm auskommen. Bevorzugt sind jedoch zwei Gelenkarme, einer im linken Endbereich und einer im rechten Endbereich des Rollotuchs. Auch mehr als zwei Gelenkarme sind möglich, bei vielen Fensterbreiten jedoch nicht erforderlich. Der Anlagebereich der Randstange teilt sich vorzugsweise auf zwei Teilbereiche auf, nämlich jeweils einen in jedem Endbereich der Randstange. Aber auch ein gemeinsamer, mittlerer Anlagebereich der Randstange wäre möglich. Eine besonders günstige und bevorzugte Ausgestaltung des Anlagebereichs besteht darin, an der Randstange Röllchen, insbesondere an deren beiden Enden, vorzusehen, so daß die elastische Andrückung der Randstange und deren Bewegung entlang des Fahrzeugfensters besonders elegant miteinander in Einklang gebracht werden. Vorzugsweise ist das Fahrzeugfensterrollo im eingefahrenen Zustand des Rollotuchs entlang des unteren Randes des betreffenden Fahrzeugfensters angeordnet und fährt die Randstange nach oben aus, wobei diese Ausfahrbewegung entsprechend der Neigung insbesondere vieler Heckfenster von Kraftfahrzeugen schräg nach oben/innen verläuft. Der Begriff "Rollotuch" ist umfassend zu verstehen; er umfaßt insbesondere stoffartige Tücher, feinmaschignetzartige Flachmaterialien aus Textilfasern oder Kunststoffen bzw. Kunststoffasern, durchscheinende Kunststoff-Flachmaterialien und gelochte Kunststoff-Flachmaterialien. Insbesondere bei Rollos für das Heckfenster von Personenkraftwagen wird das Rollotuch vorzugsweise so gewählt, daß trotz Sonnenschutz und Blendschutz hinsichtlich sich von hinten nähernder Fahrzeugscheinwerfer mindestens ein gewisser Durchblick nach hinten über den Fahrzeuginnenrückspiegel möglich ist.

Vorzugsweise ist dem Rohrmotor ein in der Wickelwelle angeordneter und von außen einstellbarer Endschalter zugeordnet, insbesondere um ein gegebenes Fahrzeugfensterrollomodell auf unterschiedliche Fensterhöhen einstellen zu können und um das Erreichen des vollständigen Ausfahrzustands des Rollotuchs nicht gesondert überwachen zu müssen.

Eine besonders platzsparende und optisch ansprechende Möglichkeit der Bereitstellung der Federvorspannung des Gelenkarms oder der Gelenkarme besteht darin, in diesem oder diesen mindestens eine Feder unterzubringen.

Obwohl es möglich ist, das der Randstange abgewandte Ende des Gelenkarms oder der Gelenkarme irgendwo am Fensterrand zu befestigen, ist es günstiger und bevorzugt, dieses andere Ende des Gelenkarms oder der Gelenkarme an einer Basis des Fahrzeugfensterrollos zu befestigen. Auf diese Art entsteht eine kompakte Fahrzeugfensterrolloeinheit, die im Herstellerwerk vollständig zusammengebaut werden kann und dann nur noch als Einheit am Fahrzeug zu montieren ist. Eine besonders bevorzugte Ausgestaltung der Fahrzeugfensterrollobasis besteht darin, zwei Seitenwangen vorzusehen, die zum einen die Wickelwelle lagern und an denen zum anderen der Gelenkarm bzw. die Gelenkarme befestigt sind. Die beiden äußeren Seitenwangen können insbesondere durch ein Verbindungsblech miteinander verbunden sein, so daß eine echte Einbaueinheit entsteht.

Da insbesondere die Heckscheiben von Personenkraftwagen von Fabrikat zu Fabrikat unterschiedliche Neigung aufweisen, ist es zumindest zur Anpassung an stark unterschiedliche Neigungen in der Regel erforderlich, für die Möglichkeit unterschiedlicher Winkel des ausgefahrenen Rollotuchs relativ zur Horizontalen Sorge zu tragen. Dies kann beispielsweise durch hinsichtlich des Winkels zur Horizontalen unterschiedliche Montage des gesamten Fahrzeugfensterrollos am Fahrzeug geschehen. Eine bevorzugte Möglichkeit besteht jedoch darin, die Ausrichtung des Gelenkarms oder der Gelenkarme, die die Abwickelrichtung des Rollotuchs bestimmt, einstellbar zu machen, insbesondere relativ zur Fahrzeugfensterrollobasis. Auf diese Weise kann das Fahrzeugfensterrollo insgesamt entsprechend der Lage der Anbringungsfläche montiert werden, und die gegebenenfalls erforderliche Abstimmung auf die Lage des Fensters relativ zur Anbringungsfläche kann durch die Einstellung der Ausrichtung des Gelenkarms oder der Gelenkarme erfolgen.

Vorzugsweise ist das Fahrzeugfensterrollo so ausgebildet, daß die elastische Anlage des Anlagebereichs der Randstange durch die Materialelastizität des Gelenkarms bzw. der Gelenkarme und/oder dessen bzw. deren Befestigungsteilen gegeben ist. Es ist aber auch möglich, hierfür gesonderte, federnde Elemente, beispielsweise an der Anbringungsstelle des Gelenkarms bzw. der Gelenkarme vorzusehen.

Wie auch die weitere Beschreibung vor Augen führt, ist die Ausdrucksweise "Anlagebereich der Randstange" funktionell und in dem Sinne zu verstehen, daß die Randstange vorzugsweise indirekt gegen das Fenster oder den Fensterrahmen anliegt, wobei sich in der Regel mindestens Rollotuch oder gesonderte Anlageteile, wie Röllchen, Gleitstücke oder dergleichen, zwischen dem Fenster bzw. dem Rahmen und der eigentlichen Randstange im engeren Sinne befinden.

Es ist bevorzugt, das Fahrzeugfensterrollo insgesamt als einbaufertige Baueinheit zu gestalten und den schlitzförmigen Bereich, durch den sich das Rollotuch mit Randstange sowie der Gelenkarm bzw. die Gelenkarme beim Ausfahren des Rollotuchs aus der Baueinheit herausbewegen, im eingefahrenen Zustand des Rollotuchs durch geeignete Mittel abzudecken, insbesondere durch eine sich federnd öffnende Klappe oder einen Tuchstreifen mit Beschwerungsstange. Diese Abdeckmittel werden beim Ausfahren des Rollotuchs zurückgeschoben und schließen sich bei eingefahrenem Rollotuch selbsttätig.

Das selbsttätige Öffnen der Klappe kann vorzugsweise so erfolgen, daß das Nicht-Abtriebsende des Rohrmotors mittels einer gefederten Drehmomentstütze gehalten ist und daß das beim Anlaufen des Rohrmotors dort, insbesondere als Verdrehung gegen Federkraft, auftretende Reaktionsdrehmoment durch Übertragungsmittel in die Öffnungsbewegung der Klappe umgesetzt wird, beispielsweise durch einen Zahnriementrieb zwischen dem als Scheibe ausgebildeten drehbaren Teil der Drehmomentstütze und einer der Klappe in deren Schwenkachse zugeordneten Scheibe. Günstig ist ein Mikroschalter zur Überwachung, daß die Klappe tatsächlich geöffnet ist, so daß nur dann der Rohrmotor zum Ausfahren des Rollotuchs weiterläuft.

Die Erfindung und Ausgestaltungen der Erfindung werden im folgenden anhand eines teilweise schematisch dargestellten Ausführungsbeispiels noch näher erläutert. Es zeigen:

Fig. 1 eine Seitenansicht des Fahrzeugfensterrollos im eingefahrenen und im teilweise ausgefahrenen Zustand (strichpunktiert);

Fig. 2 eine Draufsicht auf das Fahrzeugfensterrollo von innen her und rechtwinklig zur Ebene des Rollotuchs, entsprechend dem Pfeil II in Fig.1;

Fig. 3 einen teilweisen Längsschnitt durch die Wickelwelle des Kraftfahrzeugfensterrollos;

Fig. 4 als Einzelheit die Ausbildung eines Endes der Randstange;

Fig. 5 als Einzelheit die Befestigung eines Gelenkarms an der Basis des Kraftfahrzeugrollos;

Fig. 6 als Einzelheit und geschnitten die Unterbringung einer Feder in einem Gelenkarm.

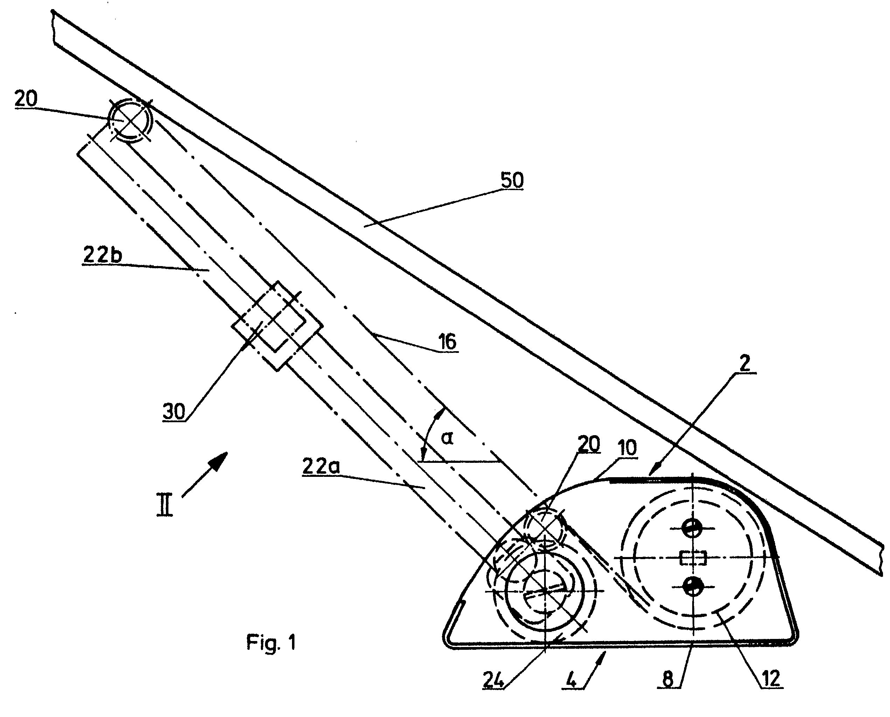

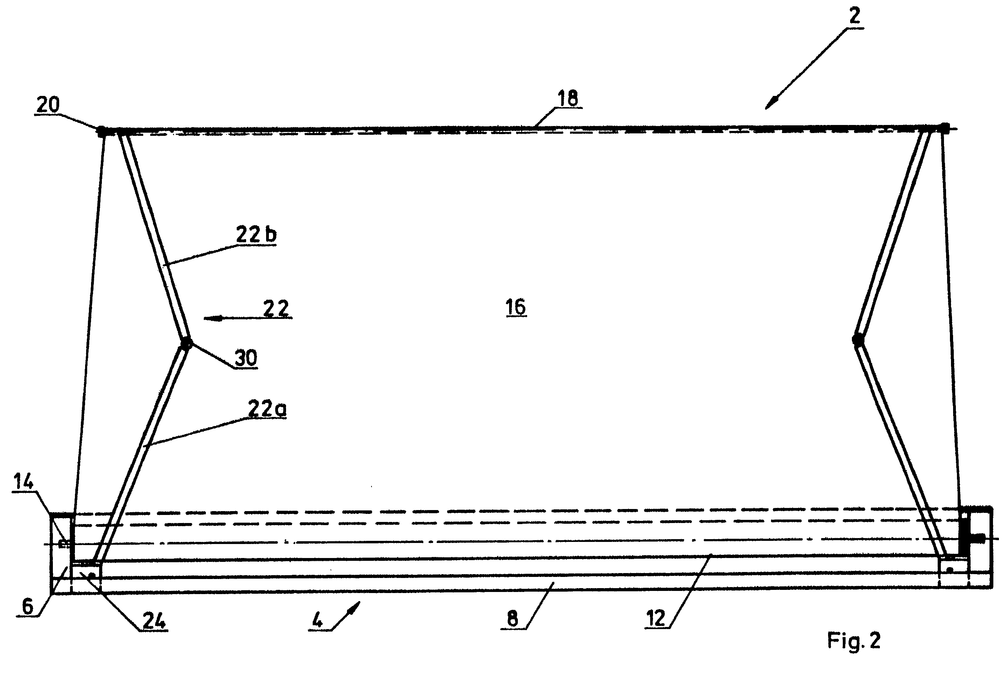

Das in Figuren 1 und 2 insgesamt gezeichnete Kraftfahrzeugfensterrollo 2 weist eine Basis 4 auf, die in der Seitenansicht (Fig.1) bzw. im Querschnitt im wesentlichen trapezförmig mit stark abgerundeten oberen Ecken ist. Die Basis 4 ist beispielsweise auf der Hutablage vor dem Heckfenster eines Personenkraftwagens derart befestigt, daß sie sich längs des unteren Randes dieses Heckfensters erstreckt. Die Basis 4 besteht im wesentlichen aus zwei plattenförmigen Seitenwangen 6 jeweils an einem Ende der Basis 4 sowie einem Blech 8, das die beiden Seitenwangen 6 mit einander verbindet und entsprechend der vorstehend beschriebenen Trapezform gebogen ist, wobei eine insgesamt schlitzförmige Öffnung 10 frei bleibt, die nach innenoben weist. Auf diese Weise bildet die Basis 4 praktisch ein Gehäuse des Fahrzeugfensterrollos 2.

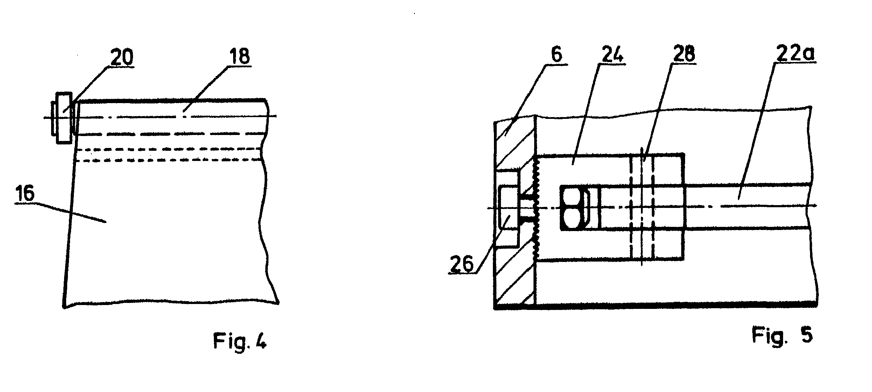

Mit Hilfe der beiden Seitenwangen 6 ist eine Wickelwelle 12 drehbar gelagert, die sich parallel zur Erstreckungsrichtung der Basis 4 erstreckt und im dem Fahrzeugfenster benachbarten Bereich des Gehäuses 4 untergebracht ist. An dem in Fig.2 linken Ende der Wickelwelle 12 ist diese Lagerung durch einen Achsstummel 14 der Wickelwelle 12 vorgenommen, während an dem in Fig.2 rechten Ende der Wickelwelle 12 die Lagerung indirekt über einen Rohrmotor bzw. dessen Endschalter vorgenommen ist, wie weiter unten noch genauer beschrieben werden wird. Auf die Wickelwelle 12 ist ein Rollotuch 16 aufgewickelt, d.h. im eingefahrenen Zustand des Rollos praktisch vollständig aufgewickelt und im ausgefahrenen Zustand des Rollos mehr oder weniger vollständig abgewickelt. In das Rollotuch 16 ist am freien Rand, d.h. am beim Ausfahren des Rollos vorangehenden Rand, eine Randstange 18 (Fig.4) eingeführt und befestigt, die sich parallel zur Erstreckungsrichtung der Basis 4 erstreckt. Die Randstange 18 trägt am linken und am rechten Ende jeweils ein drehbares Röllchen 20. Die Position der Randstange 18 mit den Röllchen 20 im eingefahrenen Zustand innerhalb des Gehäuses 4 ist ebenfalls eingezeichnet.

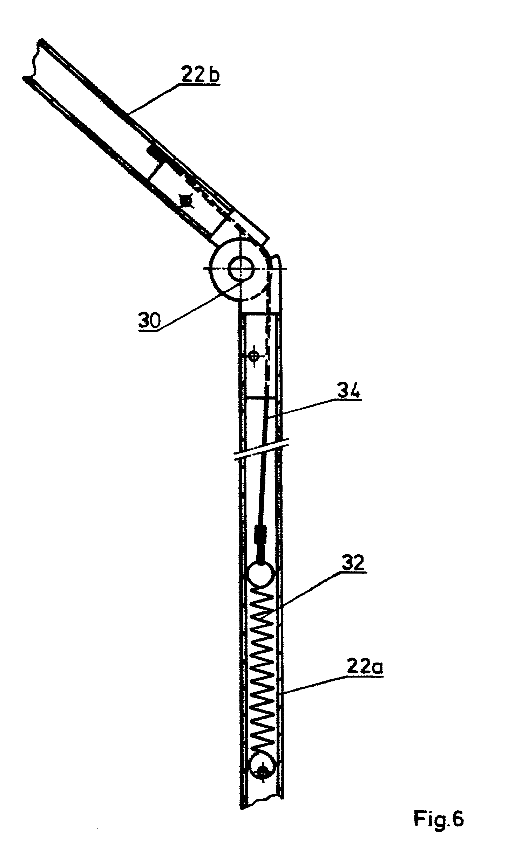

An der Innenseite der in Fig.2 linken Seitenwange 6 ist ein Gelenkarm 22 befestigt, und an der Innenseite der in Fig.2 rechten Seitenwange 6 ist spiegelbildlich ebenfalls ein Gelenkarm 22 befestigt. Die Befestigung der Gelenkarme 22 ist jeweils durch ein im wesentlichen U-förmiges Befestigungsteil 24 (Fig.5) vorgenommen, wobei die stirnseitig gezahnte Basis des Befestigungsteils 24 durch eine Schraube 26 gegen die Innenseite der betreffenden Seitenwange 6 gezogen ist. Zwischen den Schenkeln des U erstreckt sich ein Bolzen 28, an dem der basisnähere Teil 22a des Gelenkarms 22 gelenkig gelagert ist. Der basisfernere Teil 22b des jeweiligen Gelenkarms 22 ist oben gelenkig an die Randstange 18 angeschlossen. Zwischen den beiden Gelenkarmteilen 22a und 22b befindet sich jeweils eine Gelenk 30. Im Inneren des jeweiligen unteren Gelenkarmteils 22a ist einseitig eine Spiralfeder 32 befestigt (Fig.6). Am anderen Ende der Spiralfeder 32 ist ein Drahtseil 34 befestigt, das über das Gelenk 30 hinweg im unteren Endbereich des oberen Gelenkarmteils 22b befestigt ist. Die Spiralfeder 32 hat die Tendenz, die beiden Gelenkarmteile 22a und 22b in die Streckungslage zu ziehen, in der sie nur einen kleinen Winkel miteinander bilden, vgl. Fig.2. Ein gegenseitiges Verschwenken der beiden Gelenkarmteile 22a und 22b führt zu einer Streckung der Spiralfeder 32. Im vollständig ausgefahrenen Zustand des Rollos (Fig.2) bilden die beiden Gelenkarmteile 22a und 22b nur einen relativ kleinen Winkel miteinander, wobei jedoch die Spiralfeder 32 immer noch Restvorspannung hat. Im vollständig eingefahrenen Zustand des Rollos befinden sich die beiden Gelenkarmteile 22a und 22b praktisch parallel zueinander im Inneren des Gehäuses 4, wobei in diesem Zustand die Vorspannung der beiden Spiralfedern 32 in den beiden Gelenkarmen 22 am größten ist. Die Gelenkarme 22 befinden sich vom Innenraum des Fahrzeugs her gesehen, innerhalb von dem Rollotuch 16. Das Rollotuch 16 ist entsprechend der Form der meisten Kraftfahrzeugheckfenster oben schmaler als unten. Die Anlenkungsstellender Gelenkarme 22 an der Randstange 18 sind jeweils relativ dicht an deren Enden.

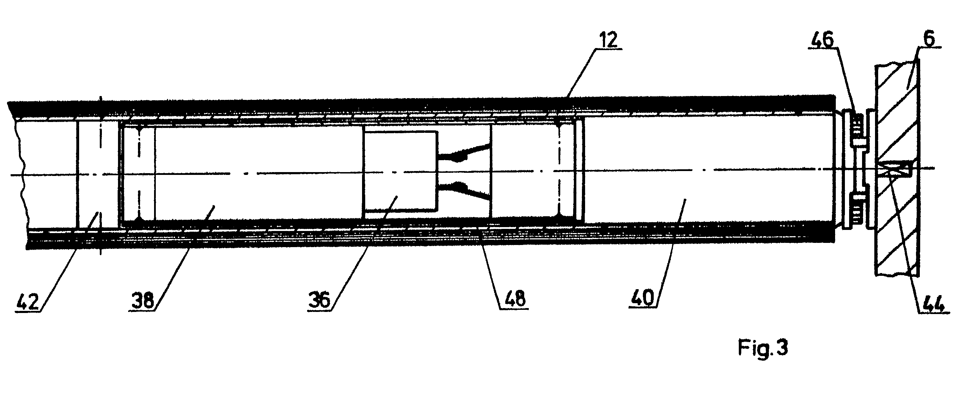

Fig. 3 veranschaulicht die Unterbringung eines Rohrmotors 36 mit zugeordnetem, mehrstufigem Planetengetriebe 38, in dem eine Bremse für den Motor 36 integriert ist, und einer Endschaltereinheit 40 im Inneren der Wickelwelle 12. Der Abtrieb des Untersetzungsgetriebes 38 erfolgt am in Fig.3 linken Ende über ein Kupplungsstück 42 von innen her an die Wickelwelle 12. Die Wickelwelle 12 nimmt außerdem eine die Endschaltereinheit 40 außen umgebende, innen verzahnte Hülse von außen her mit und liefert somit der Endschaltereinheit 40 die erforderliche Information über die Anzahl der Umdrehungen der Wickelwelle 12. Der rechte Endbereich der Endschaltereinheit 40 ragt nach rechts aus der Wickelwelle 12 heraus und ist mit einem Vierkant 44 in der rechten Seitenwange 6 gelagert. Außerdem erkennt man von außen zugängliche Zahnräder 46 zwischen dieser Seitenwange 6 und dem Ende der Wickelwelle 12. Der Motor 36 und das Untersetzungsgetriebe 38 stecken in einer Hülse 48, die sich nicht dreht und die Verbindung zu einem ungedrehten Teil der Endschaltereinheit 40 herstellt. Der Elektromotor 36 wird mit der Bordspannung des Kraftfahrzeugs von beispielsweise 12 V betrieben.

Man erkennt anhand von Fig. 5, daß die Ausrichtung des jeweiligen Befestigungsteils 24 nach Lösen der Schraube 26 einstellbar ist, indem das Befestigungsteil 24 um eine parallel zur Erstreckungsrichtung des Fahrzeugfensterrollos verlaufende Achse drehbar und dann infolge der Zahnung wieder sicher festlegbar ist. Diese Ausrichtung bestimmt den Winkel a (Fig. 1) unter dem das Rollotuch 16 ausgefahren wird. Diese Ausrichtung wird so vorgenommen, daß die Röllchen 20 mindestens ein Stück vor Erreichen des oberen Randes des Fensters 50 innen an dieses zur Anlage kommen und so das Rollo oben abstützen, um unerwünschte Schwingungen zu vermeiden. Die Kraft der elastischen Anlage der Röllchen 20 und damit der Randstange 18 am Fenster 50 richtet sich ebenfalls nach der beschriebenen Ausrichtungseinstellung der Befestigungsteile 24. Die Kraft der elastischen Anlage an dem Fenster 50 entsteht durch die Elastizität der Gelenkarme 22 und/oder der vorzugsweise aus Kunststoff bestehenden Befestigungsteile 24. Beim Ausfahren des Rollotuchs 16 wird dieses durch die unter Federvorspannung stehenden Gelenkarme 22 gespannt gehalten bzw. aus der Basis 4 herausgezogen, wobei der mitlaufende Motor 36 das Ausmaß des Herausziehens bestimmt. Zum Einfahren überwindet der Elektromotor 36 die Federvorspannungskraft der Gelenkarme 22.

Das Fahrzeugfensterrollo findet bevorzugt Einsatz bei den am Anfang der Beschreibung erwähnten Arten von Fahrzeugfenstern.

Die Zahnung des Befestigungsteils 24 kann auch fehlen, so daß dieses rein durch den Anpreßdruck der Schraube 26 verdrehfest gehalten ist. Man kann alternativ zwischen dem Befestigungsteil 24 und der Seitenwange 6 einen selbsthemmenden Konus, einen Reibbelag oder eine Sicherungsscheibe vorsehen.

Fig.1 veranschaulicht, daß die Ausfahrrichtung des Rollotuchs 16 steiler ist als die Lage der Scheibe 50, so daß die Röllchen 20 erst etwa im mittleren Bereich der Scheibenhöhe an der Scheibe 50 zur Anlage kommen. Dies ist nicht störend, da vorher die Vibrationstendenz des Rollos kleiner ist und da sich das Rollo in der Regel entweder im voll eingefahrenen oder im voll ausgefahrenen Zustand befindet.

**Patentansprüche**

1. Fahrzeugfensterrollo, mit einer Wickelwelle für das an seinem freien Rand mit einer Randstange versehene Rollotuch und mit einem elektrischen Bewegungsantrieb für das Rollotuch,
dadurch gekennzeichnet, daß innerhalb der Wickelwelle ( 12 ) ein Rohrmotor ( 36 ) als elektrischer Bewegungsantrieb der Wickelwelle ( 12 ) angeordnet ist;
daß das Rollotuch ( 16 ) durch mindestens einen an der Randstange ( 18 ) angreifenden Gelenkarm ( 22 ) gespannt gehalten ist, der in Streckungsrichtung unter Federvorspannung steht;
und daß ein Anlagebereich ( 20 ) der Randstange ( 18 ) mindestens gegen Ende der Ausfahrbewegung des Rollotuchs ( 16 ) elastisch in Anlage an das Fahrzeugfenster ( 50 ) oder dessen Rahmen gedrückt ist.

2. Fahrzeugfensterrollo nach Anspruch 1, dadurch gekennzeichnet, daß dem Rohrmotor ( 36 ) ein in der Wickelwelle ( 12 ) angeordneter und von außen einstellbarer Endschalter ( 40 ) zugeordnet ist.

3. Fahrzeugfensterrollo nach Anspruch 1 oder 2, dadurch gekennzeichnet, daß die Federvorspannung des mindestens einen Gelenkarms ( 22 ) durch mindestens eine, im Inneren des Gelenkarms ( 22 ) untergebrachte Feder ( 32 ) gestellt ist.

4. Fahrzeugfensterrollo nach einem der Ansprüche 1 bis 3, dadurch gekennzeichnet, daß als Anlagebereich an der Randstange ( 18 ) angebrachte Röllchen ( 20 ) vorgesehen sind.

5. Fahrzeugfensterrollo nach einem der Ansprüche 1 bis 4, dadurch gekennzeichnet, daß der mindestens eine Gelenkarm ( 22 ) an einer auch die Wickelwelle ( 12 ) tragenden Basis ( 4 ) des Fahrzeugfensterrollos ( 2 ) befestigt ist.

6. Fahrzeugfensterrollo nach Anspruch 5, dadurch gekennzeichnet, daß die Basis ( 4 ) zwei Seitenwangen ( 6 ) aufweist, die die Wickelwelle ( 12 ) lagern und an denen jeweils ein Gelenkarm ( 22 ) befestigt ist.

7. Fahrzeugfensterrollo nach einem der Ansprüche 1 bis 6, dadurch gekennzeichnet, daß die durch die Ausrichtung des mindestens einen Gelenkarms ( 22 ) gegebene Abwickelrichtung des Rollotuchs ( 16 ) durch Ausrichtungsverstellung des mindestens einen Gelenkarms ( 22 ) einstellbar ist.

8. Fahrzeugfensterrollo nach einem der Ansprüche 1 bis 7, dadurch gekennzeichnet, daß die elastische Anlage des Anlagebereichs ( 20 ) der Randstange ( 18 ) durch die Materialelastizität des mindestens einen Gelenkarms ( 22 ) und/oder dessen Befestigungsteils ( 24 ) gegeben ist.

9. Fahrzeugfensterrollo nach einem der Ansprüche 1 bis 8, gekennzeichnet durch eine Ausbildung als Baueinheit mit einer sich selbsttätig öffenden und schließenden Klappe für einen schlitzförmigen Bereich, durch den sich das Rollotuch ( 16 ) mit der Randstange (18) und der mindestens eine Gelenkarm (22) beim Ausfahren herausbewegen.

10. Fahrzeugfensterrollo nach Anspruch 9, dadurch gekennzeichnet, daß zum Halten des nicht dem Bewegungsantrieb der Wickelwelle (12) dienenden Endes des Rohrmotors (36) eine unter dem Reaktionsdrehmoment des Rohrmotors (36) gegen Federkraft nachgebende Halterung vorgesehen ist und daß Übertragungsmittel vorgesehen sind, die die Nachgebebewegung der Halterung in die Öffnungsbewegung der Klappe umsetzen.

**Claims**

1. A vehicle window roller blind comprising a winding shaft for the roller blind fabric provided at its free edge with an edge rod, and an electric movement drive for the roller blind fabric, characterized in that a tube motor (36) is disposed within the winding shaft (12) as the electric movement drive of the winding shaft (12); that the roller blind fabric (16) is kept under tension by at least one articulated arm (22) in engagement with the edge rod (18) and being spring-biased in the direction towards straightening out; and that an abutment portion (20) of the edge rod (18) is resiliently urged into abutment against the vehicle window (50) or the frame thereof at least towards the end of the movement of extension of the roller blind fabric (16).

2. A vehicle window roller blind according to claim 1, characterized in that the tube motor (36) has a limit switch (40) associated therewith which is disposed in the winding shaft (12) and adjustable from the outside.

3. A vehicle window roller blind according to claim 1 or 2, characterized in that the spring bias of the at least one articulated arm (22) is established by at least one spring (32) accommodated inside of the articulated arm (22).

4. A vehicle window roller blind according to any one of claims 1 to 3, characterized in that small rollers (20) attached to the edge rod (18) are provided as abutment portion.

5. A vehicle window roller blind according to any one of claims 1 to 4, characterized in that the at least one articulated arm (22) is mounted on basis (4) of the vehicle window roller blind (2) which also carries the winding shaft (12).

6. A vehicle window roller blind according to claim 5, characterized in that the basis (4) has two side cheeks (6) which support the winding shaft (12) and each have an articulated arm (22) mounted thereto.

7. A vehicle window roller blind according to any one of claims 1 to 6, characterized in that the unwinding direction of the roller blind fabric (16) determined by the orientation of the at least one articulated arm (22) is adjustable by orientation adjustment of the at least one articulated arm (22).

8. A vehicle window roller blind according to any one of claims 1 to 7, characterized in that the resilient abutment of the abutment portion (20) of the edge rod (18) is established by the elasticity of the material of the at least one articulated arm (22) and/or the mounting member (24) thereof.

9. A vehicle window roller blind according to any one of claims 1 to 8, characterized by a design as a constructional unit having an automatically opening and closing flap for a slot-shaped portion through which the roller blind fabric (16) with the edge rod (18) and the at least one articulated arm (22) move outwardly during extension.

10. A vehicle window roller blind according to claim 9, characterized in that for holding the end of the tube motor (36) which does not serve for the movement drive of the winding shaft (12), there is provided a support which yields against spring force under the reaction torque of the tube motor (36), and in that transfer means are provided which convert the yielding motion of the support into the opening motion of the flap.

## Revendications

1. Rideau pour fenêtre de véhicule comportant un arbre d'enroulement du tissus de rideau muni à son extrémité libre d'une tringle de bordure et d'un entraînement électrique pour le tissu de rideau, caractérisé en ce qu'à l'intérieur de l'arbre d'enroulement est placé un moteur tubulaire (36) comme système d'entraînement électrique pour l'arbre d'enroulement (12), en ce que le tissu du rideau (16) est maintenu tendu par au moins un bras d'articulation (18) s'engageant sur la tringle de bordure, qui est tensioné en direction d'extension par un ressort, en ce qu'une zone de mise en place (20) de la tringle de bordure (18) est pressée au moins contre des butées du mouvement de déploiement du tissu du rideau, élastiquement en position sur la vitre du véhicule ou son châssis.

2. Rideau pour fenêtre de véhicule selon la revendication 1, caractérisé en ce qu'au moteur de tube (36) est associé un arbre d'enroulement (12) et un commutateur de fin de course (40) réglable de l'extérieur.

3. Rideau pour fenêtre de véhicule selon la revendication 1 ou 2, caractérisé en ce que la précontrainte élastique d'au moins un bras articulé (22) est réglée par au moins un ressort (32) placé à l'intérieur du bras articulé (22).

4. Rideau pour fenêtre de véhicule selon l'une des revendications 1 à 3, caractérisé en ce qu'en tant que zone de mise en place, on prévoit des roulettes (20) placées sur la tringle de bordure (18).

5. Rideau pour fenêtre de véhicule selon l'une des revendications 1 à 4, caractérisé en ce qu'au moins un des bras articulés (22) est fixé sur une base (4) du rideau (2) pour fenêtre de véhicule portant aussi l'arbre d'enroulement (12).

6. Rideau pour fenêtre de véhicule selon la revendication 5, caractérisé en ce que la base (4) comporte deux tringles latérales (6) qui supportent l'arbre d'enroulement (12) et sur chaoune desquelles est fixé un bras d'articulation (22).

7. Rideau pour fenêtre de véhicule selon l'une des revendications 1 à 6, caractérisé en ce que le sens d'enroulement du tissu de rideau (16) donné par l'orientation d'au moins un bras articulé (22) est réglable par le déplacement d'au moins un bras articulé (22).

8. Rideau pour fenêtre de véhicule selon l'une des revendications 1 à 7, caractérisé en ce que la mise en place élastique de la zone de mise en place (20) de la tringle de bordure (18) est apportée par l'élasticité du matériau d'au moins un bras articulé (22) et/ou de son élément de fixation.

9. Rideau pour fenêtre de véhicule selon l'une des revendications 1 à 8, caractérisé par une structure sous forme d'ensemble de montage comportant un volet pour une zone en forme de fente s'ouvrant et se fermant automatiquement à travers laquelle le tissu de rideau (16) se déplace vers l'extérieur avec la tringle de bordure (18) et l'au moins un bras articulé (22) lors du déploiement.

10. Rideau pour fenêtre de véhicule selon la revendication 9, caractérisé en ce que pour le maintien de l'extrémité du moteur (36) ne servant pas à l'entrainement de l'arbre d'enroulement (12), il est prévu un support fléchissant sous l'effet du couple antagoniste du moteur tubulaire contre la force de ressort, et en ce qu'on prévoit des moyens de transmission qui transforme le mouvement de fléchissement du support en mouvement d'ouverture du volet.

Fig. 1

EP 0 221 573 B1

EP 0 221 573 B1

Fig. 2

Fig. 3

EP 0 221 573 B1

Fig. 4

Fig. 5

EP 0 221 573 B1

22b

30

34

32

22a

Fig.6